(19) Europäisches Patentamt

European Patent Office

Office européen des brevets

(11) **EP 4 393 782 B1**

(12) **EUROPEAN PATENT SPECIFICATION**

(45) Date of publication and mention
of the grant of the patent:
**14.05.2025 Bulletin 2025/20**

(21) Application number: **23155595.4**

(22) Date of filing: **08.02.2023**

(51) International Patent Classification (IPC):
***B60T 8/17*** *(2006.01)*

(52) Cooperative Patent Classification (CPC):
**B60T 8/1703**

(54) **FAULT DIAGNOSTICS SYSTEM FOR AN AIRCRAFT BRAKE SYSTEM**

FEHLERDIAGNOSESYSTEM FÜR EIN FLUGZEUGBREMSSYSTEM

SYSTÈME DE DIAGNOSTIC DE DÉFAILLANCE POUR UN SYSTÈME DE FREINAGE D'AÉRONEF

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.12.2022 IN 202221075973**

(43) Date of publication of application:
**03.07.2024 Bulletin 2024/27**

(73) Proprietor: **Airbus Defence and Space GmbH
82024 Taufkirchen (DE)**

(72) Inventors:
• **KUMAR, Vinoth
82024 Taufkirchen (DE)**
• **JAYAKUMAR, Balasridhar
82024 Taufkirchen (DE)**

(74) Representative: **LKGLOBAL
Lorenz & Kopf Patentanwalt
Attorney at Law PartG mbB
Brienner Straße 11
80333 München (DE)**

(56) References cited:
**CN-A- 114 548 205      US-A1- 2019 371 093
US-A1- 2021 171 221      US-A1- 2022 284 292**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical field

The invention relates to a fault diagnostics system for an aircraft brake system, an aircraft having such a fault diagnostics system as well as a fault diagnostics method for an aircraft brake system.

Background of the invention

Modern passenger and transport aircraft are usually equipped with a variety of sensors to enable health monitoring that is capable of monitoring the behavior of systems inside the aircraft. For example, aircraft brake system diagnostics are known that are based on calculating performance indicators that allow to identify and diagnose an anomalous behavior. However, algorithms used for such a system diagnostic are not capable of finding the reason behind an anomalous behavior and they cannot quantify the extent of an undesired component state.

Exemplarily, EP 2 468 596 B1 proposes an aircraft brake performance monitoring system that operates by an energy differential calculated from a brake demand energy and energy absorbed during a braking operation. If a significant differential is assessed, it would be reported as an anomalous behavior.

As another example, EP 3 354 523 B1 proposes a fault detection system for an aircraft braking system having a controller for calculating an expected maximum temperature of a brake based on torque information, wear information and wheel speed information and to determine whether a significant temperature discrepancy exists between the expected maximum temperature and a measured brake temperature in order to initiate an alert.

A further example, US 2019/371093 A1 describes systems, methods, and apparatuses that are directed to vehicle self-diagnostics. For example, a vehicle can include sensors monitoring vehicle components, for perceiving objects and obstacles in an environment, and for navigating the vehicle to a destination. Data from these and other sensors can be leveraged to determine a behavior associated with the vehicle. Based at least in part on determining the behavior, a vehicle can determine a fault and query one or more information sources associated with the vehicle to diagnose the fault. Based on diagnosing the fault, the vehicle can determine instructions for redressing the fault. The vehicle can diagnose the fault in near-real time, that is, while driving or otherwise in the field.

Summary of the invention

It is an object of the invention to propose an alternative fault diagnostics system for an aircraft brake system that is capable of not only detecting an anomalous behavior of an aircraft brake system, but also to isolate a root cause of a detected anomalous behavior and to quantify an extent of a damage due to the anomalous behavior (if it is progressive in nature).

This object is met by a fault detection system having the features of independent claim 1. Advantageous embodiments and further improvements may be gathered from the subclaims and the following description.

A fault detection system for an aircraft brake system is proposed, comprising a plurality of sensors coupled with the brake system and/or wheels of the aircraft coupled with the brake system for detecting physical parameters that characterize at least a braking process, an onboard data acquisition unit, and a diagnostics unit, wherein the onboard data acquisition unit is coupled with the plurality of sensors and is adapted to collect sensor data generated by the plurality of sensors during a braking process, wherein the onboard data acquisition unit is couplable with the diagnostics unit and is adapted to transfer the collected sensor data or data based on the collected sensor data to the diagnostics unit, and wherein the diagnostics unit comprises a processing unit adapted to analyze the received data through a machine-learning algorithm, which is trained using representative data characterizing normal and various anomalous states, to detect an anomalous state of the aircraft brake system, and, if an anomalous state is detected, to isolate a root cause of the anomalous state.

A gist of the invention lies in using a machine-learning algorithm to monitor and/or analyze the function of the aircraft brake system and diagnose possible anomalous states. A typical aircraft hydraulic brake and wheel system has a plurality of sensors such as temperature sensors, pressure sensors, wheel speed sensors and other. These deliver sensor data that allow to provide an intelligent assessment of the brake system function. In particular, one of the major causes for operational interruption, an erroneous torque transmission, can be diagnosed through the method according to the invention by analyzing collected sensor data.

The above-identified data acquisition unit may be provided in the form of a separate device that is integrated into the aircraft and connected to the plurality of sensors. However, it may also be integrated into an already existing device of the aircraft, for example into a flight management system and/or a flight control system and/or an already existing health monitoring system, where it may be realized in the form of an algorithm or a routine inside an already existing algorithm.

Also, the plurality of sensors that are used by the system may already be present in the aircraft and may be connected to the flight management system and/or the flight control system and/or a health monitoring system or any other device inside the aircraft. Depending on the type of aircraft, the brake system and the intended operating conditions, a suitable set of sensor data may be selected that delivers the sensor data to be collected.

The general task of the data acquisition unit is to acquire certain sensor data to feed the sensor data into the diagnostics unit. Preferably, the data acquisition unit is adapted to acquire sensor data over a predetermined time interval with a suitable sampling frequency to produce and save a time series of sensor data. For example, the data acquisition unit is adapted to collect sensor data from the touchdown through the whole landing sequence until the aircraft is parked. While it may be possible to transfer the sensor data during the predetermined time interval to the diagnostics unit, it may also be feasible to collect the data first and transfer it afterwards.

The diagnostics unit may either be placed inside the aircraft as an internal unit or it may be arranged outside the aircraft as an external unit. With increasing amount of available processing power in particular in larger and modern aircraft it would also be feasible to provide it as an internal unit to conduct the diagnostic process directly inside the aircraft. When using an external diagnostics unit, it may be placed as a stationary device in a facility of the aircraft operator or in the form of a mobile device to receive the acquired sensor data through a data connection or through using a portable storage device.

For conducting an appropriate diagnosis, the diagnostics unit comprises a machine learning algorithm that can be fed with representative data with and without various anomalous states for training the algorithm. Preferably, for achieving the best results, training data should cover an entire operating profile of the aircraft which may include approach velocity/sink rate, gross weight of the aircraft, friction co-efficient of the runway (dry/wet/asphalt/snowy) and brake pad friction coefficient. For training and/or validating the algorithm, it may be feasible to use an end to end brake physics based model of the aircraft brake system, which comprises fault injection capabilities for simulating different faults, such as a hydraulic clog, a valve spool stuck at an open or a closed position, a smaller than required opening of the spool and other.

The diagnostics unit is adapted to feed the collected sensor data into the machine learning algorithm to analyze the sensor data. As machine learning algorithms are probabilistic in nature, the system may be capable of determining at least one statistical feature from the collected sensor data and calculate at least one condition indicator from the at least one statistical feature, which is then used for assessing the probabilities of various anomalous states presented to the machine learning algorithm during the training. Detecting the presence of an anomalous state may then be interpreted as exceeding a previously set cut-off probability.

In an advantageous embodiment, the diagnostics unit is a separate component arrangeable outside the aircraft, wherein the diagnostics unit is connectable to the onboard data acquisition unit through a wireless data transfer device. The wireless data transfer device may be realized in form of an already existing device in the aircraft any may be couplable to the data acquisition unit through a bus or network. However, the wireless data transfer device may be realized in the form of a separate, dedicated device. The transfer of collected sensor data may be accomplished after the braking process and, if so, the data transfer rate of the wireless transfer device is not critical.

In an advantageous embodiment, the plurality of sensors is selected from a group of sensors, the group comprising: a wheel speed sensor, a weight on wheel sensor, a brake valve downstream pressure sensor, an aircraft speed sensor, a brake temperature sensor, an aircraft position sensor, an aircraft velocity sensor, and an aircraft acceleration sensor. The aircraft position sensor may be capable of delivering the aircraft position at least along a longitudinal axis (x axis) and a lateral axis (y axis). The same applies, in analogy, to the aircraft acceleration sensor. Furthermore, the velocity sensor may be capable of at least delivering the aircraft velocity along the x axis. The sensor data of these sensors is capable of describing or characterizing all effects of the brake system onto the aircraft during a braking process.

In an advantageous embodiment, the system is adapted to calculate sensor features from the collected sensor data for transferring to or analyzing in the diagnostics unit, wherein the sensor features are calculated through at least one calculation method from a group of calculation methods, the group comprising mean, root mean square, standard deviation, skewness, kurtosis, spectral features, and crest factor. Thus, from abstract sensor data, useful statistical and spectral features are created. The calculation may either be done in the data acquisition unit or in the diagnostics unit.

In an advantageous embodiment, the diagnostics unit is adapted to detect the presence of any anomalous state by calculating at least one condition indicator from the received data through executing a linear discriminant analysis (LDA) classification algorithm, and comparing the at least one condition indicator with previously established limits for anomalous states. During training the machine learning algorithm using historical data, a transformation matrix containing several weight factors is computed, which individually weight the received data for detecting an anomalous state. The received data may comprise the sensor features mentioned above. By executing the LDA classification algorithm, the dimensionality of the received data is further reduced to project the set of received data onto a lower-dimensional space with good class-separability. In the step of detecting, the general presence of an anomalous state is assessed by comparing the at least one condition indicator with certain pre-established limits that separate normal behavior and anomalous behavior of the brake system. The transformation matrix for this initial detection step may be a row vector and the received data, such as the sensor features, may be a vector. For calculating the at least one condition indicator, the transformation matrix and the received data are multiplied, which in this case results in a scalar for providing a simple and quick result as to whether the brake system state is normal or anomalous.

When training the machine-learning algorithm the diagnostics unit or an external device may also extract condition indicators, that are used to detect and isolate anomalous states, the same way. However, during training, the machine-learning algorithm has the knowledge of the presence of an anomalous state as well as the root cause for it. The sensor features, which are responding to the injected faults during training, may be selected for the calculation of condition indicators. Resultantly, condition indicators are formulated by the LDA algorithm in a way, that faulty and nominal cases are well separable by the condition indicators.

In an advantageous embodiment, the diagnostics unit is further adapted to supply the condition indicators to a Bayesian algorithm to determine conditional probabilities of several pre-defined and trained fault cases and comparing the determined conditional probabilities with previously established condition probability tables to isolate the root cause of the anomalous state. This step may be referred to as fault isolation, which is conducted after the fault detection, i.e. if the general presence of an anomalous state is detected, in order to identify the cause of the anomalous state. The previously established condition probability tables are created through training, which is explained in further detail below. A conditional probability $P(A|B)$ may be defined in the form of

$$P(A|B) = \frac{P(A)P(B|A)}{P(B)},$$

wherein:

$P(A|B)$ is the conditional probability of event A to occur when B is true which is called as the posterior probability,
$P(A)$ is the independent probability of event A to occur, which is also referred to as prior probability,
$P(B)$ is the independent probability of event B to occur, and
$P(B|A)$ is the conditional probability of event B to occur when A is true.

The pre-defined fault cases may exemplarily include a servo valve spool being stuck at a closed position, the servo valve spool being stuck at an open position, a servo calve opening area being smaller than required, the presence of a hydraulic clog, or similar. The probabilities of these fault cases may be compared to individual cut-off probabilities, which results in a statement of a root cause of the anomalous behavior.

Again, during training, the root causes are known and the condition probability tables can be created from historical data and under the knowledge of injected faults. The diagnostics unit or another device is adapted to supply condition indicators to a Bayesian algorithm to determine conditional probabilities, and is adapted to create conditional probability tables from the representative data. The conditional probability tables can then be used for detecting anomalous states. In the probability theory, the Bayesian theorem is used to calculate the probability of certain events to happen under specified conditions, which form said conditional probabilities, leveraging the prior experience and the likelihood.

In an advantageous embodiment, the diagnostics unit is further adapted to check, whether the isolated root cause is progressive in nature, and to execute a regression algorithm for a magnitude assessment. When it is found that the anomalous behavior results from a fault that is progressive in nature, it is crucial to quantify the fault magnitude. For this, a machine-learning based regression model may be used to quantify the fault, which may be further referred to as a fault identification. For example, a hydraulic clog and a valve opening area being smaller than commanded opening area may be two fault modes that are progressive in nature. For the identification, the brake servo valve pressure, servo valve current, brake temperature and aircraft velocity in x direction may be used. Sensor features are extracted from time series data, wherein the sensor features may include mean, median frequency, equivalent noise bandwidth, spectral kurtosis, occupied bandwidth, instantaneous frequency, and power bandwidth. These progressive faults may affect the dynamics of the sensor signal and hence, spectral features may be helpful for fault identification.

In analogy to the above, the invention further relates to a fault diagnostics method for an aircraft brake system, comprising collecting, through an onboard data acquisition unit, sensor data from a plurality of sensors coupled with the brake system and/or wheels of the aircraft coupled with the brake system for detecting physical parameters that characterize at least a braking process; transferring the collected sensor data or data based on the collected sensor data to a diagnostics unit; and analyzing the received data through a machine-learning algorithm in a processing unit, which is trained using representative data characterizing normal and various anomalous states, to detect an anomalous state of the aircraft brake system, and, if an anomalous state is detected, to isolate a root cause of the anomalous state.

In an advantageous embodiment, the diagnostics unit is a separate component arrangeable outside the aircraft, wherein the method further comprises connecting the onboard data acquisition unit to the diagnostics unit through a wireless data transfer device.

In an advantageous embodiment, the plurality of sensors is selected from a group of sensors, the group comprising a wheel speed sensor, a weight on wheel sensor, a brake valve downstream pressure sensor, an aircraft speed sensor, a brake temperature sensor, an aircraft position sensor, an aircraft velocity sensor, and an aircraft acceleration sensor.

In an advantageous embodiment, the method further comprises calculating sensor features from the collected sensor data for transferring to or analyzing in the diagnostics unit, wherein the sensor features are calculated through at least one calculation method from a group of calculation methods, the group comprising mean, root mean square, standard deviation, skewness, kurtosis, spectral features, and crest factor.

In an advantageous embodiment, the method further comprises detecting the presence of any anomalous state by calculating at least one condition indicator from the received data through executing a linear discriminant analysis (LDA) classification algorithm, and comparing the at least one condition indicator with previously established limits for anomalous states.

In an advantageous embodiment, the method further comprises supplying the condition indicators to a Bayesian algorithm to determine conditional probabilities of several pre-defined and trained fault cases and comparing the determined conditional probabilities with previously established condition probability tables to isolate the root cause of the anomalous state.

In an advantageous embodiment, the method further comprises checking, whether the isolated root cause is progressive in nature, and executing a machine-learning based regression algorithm for a magnitude assessment of the root cause, if the isolated root cause is progressive in nature.

Still further, the invention relates to an aircraft having a system of the above description. Here, the onboard data acquisition unit is arranged inside the aircraft and the diagnostics unit may be an internal or external device, as mentioned above.

Brief description of the figures

In the following, the attached drawings are used to illustrate exemplary embodiments in more detail. The illustrations are schematic and not to scale. Identical reference numerals refer to identical or similar elements. They show:

Fig. 1 shows a schematic, block-oriented illustration of a fault diagnostics system that conducts a fault diagnostics method.

Fig. 2 shows a schematic illustration of a process of calculating condition indicators and fault probabilities.

Fig. 3 is a schematic view of an aircraft having a fault diagnostics system.

Detailed description of exemplary embodiments

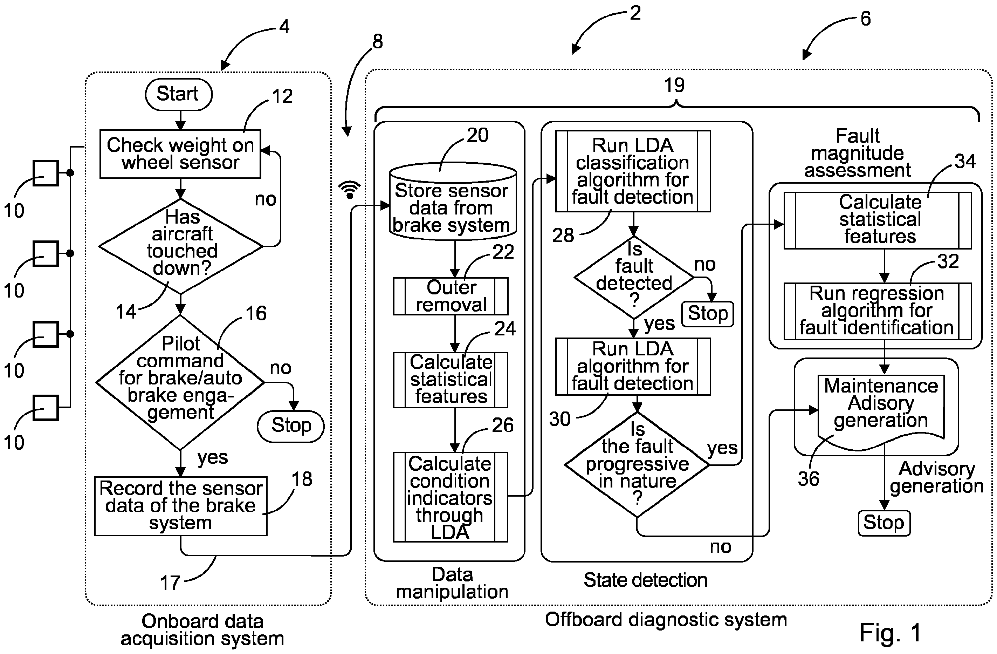

Fig. 1 shows a schematic, block-oriented view of a fault diagnostics system 2 for an aircraft brake system. The system 2 comprises an onboard data acquisition unit 4 and an exemplarily external diagnostics unit 6, which is couplable with the onboard data acquisition unit 4 through a wireless communication protocol 8. The system 4 comprises a plurality of sensors 10 or uses a plurality of already existing sensors 10, wherein the sensors 10 are coupled with the brake system and/or wheels of the aircraft coupled with the brake system for detecting physical parameters that characterize at least a braking process. The data acquisition unit 4 is connected to the sensors 10 and is adapted to collect sensor data generated by the plurality of sensors during a braking process.

Exemplarily, the onboard data acquisition unit 4 repeatedly queries 12 the state of a weight on wheel sensor (not shown herein) to check whether the aircraft has touched down 14. If this is the case, a pilot command for brake or auto brake engagement 16 is awaited to start to collect / record 18 data of the sensors 10.

Collected sensor data is transferred 17 to the diagnostics unit 6 through the wireless communication protocol 8. The diagnostics unit 6 is then able to analyze 19 the collected sensor data. As a first step, exemplarily the received sensor data is stored 20. Afterwards, outlier may be removed 22, such that isolated, implausible sensor data is eliminated.

Exemplarily, the diagnostics unit 6 is adapted to calculate sensor features from the collected sensor data for further analyzing in the diagnostics unit 6. This is done by calculating 24 statistical features, e.g. mean, root mean square, standard deviation, skewness, kurtosis, and crest factor. Afterwards, at least one condition indicator from the processed data is calculated 26 through executing a linear discriminant analysis (LDA) classification algorithm. The part from storing 20 to calculating 26 the at least one condition indicator may be referred to as data manipulation.

Afterwards, a state detection can be conducted by comparing 28 the at least one condition indicator with previously established limits for anomalous states. If a fault is detected, the diagnostics unit 6 further supplies the condition indicators to a Bayesian algorithm to determine conditional probabilities of several pre-defined and trained fault cases and comparing the determined conditional probabilities with previously established condition probability tables to isolate 30 the root cause of the anomalous state. When knowing the root cause, it is also known, whether the root cause is progressive in nature.

A fault magnitude assessment can follow on if the root cause is progressive in nature. A machine-learning based regression algorithm for a magnitude assessment of the root cause may then be executed 32 if the isolated root cause is progressive in nature. This may be preceded by a further calculation 34 of statistical features, such as mean, median frequency, equivalent noise bandwidth, spectral kurtosis, occupied bandwidth, instantaneous frequency, and power bandwidth.

As a result, the system 2 may generate 36 a maintenance advisory, which includes a root cause of the anomalous state and, if it is progressive in nature, the magnitude of the respective fault.

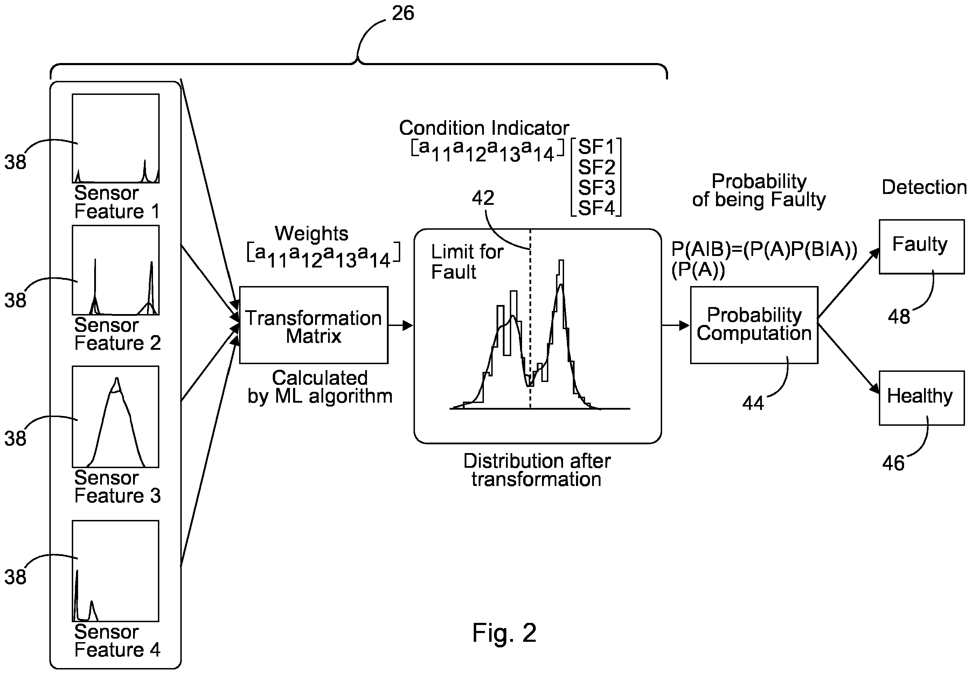

Fig. 2 shows a schematic illustration of the process of calculating 26 the at least one condition indicator. At the left hand side in Fig. 2, various sensor features 38 are shown. A transformation matrix 40 having several weight factors established during training of a machine learning algorithm, is calculated with the sensor features 38 to form the condition indicators. These allow to detect an anomalous state by comparing with a pre-established limit 42.

Afterwards, the conditional probabilities of the pre-defined and trained fault cases are calculated 44. Resulting determined conditional probabilities 46 of the presence of a certain fault case and probabilities 48 of the absence of a certain fault case are compared to find out the most probably fault case.

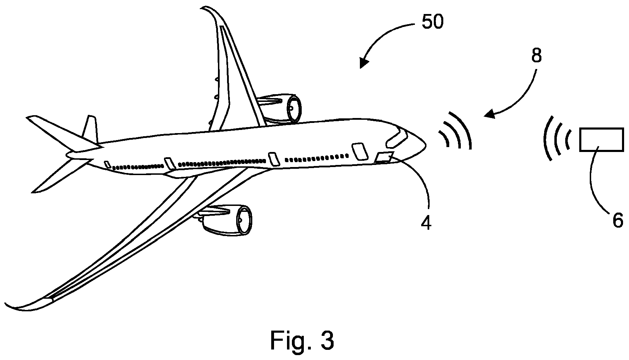

Finally, Fig. 3 shows an aircraft 50, which comprises a fault diagnostics system 2. Here, the data acquisition unit 4 is arranged inside the aircraft 50, while the diagnostics unit 6 is arranged externally.

Reference numerals

| | |
|---|---|
| 2 | fault diagnostics system |
| 4 | onboard data acquisition unit |
| 6 | diagnostics unit |
| 8 | wireless communication protocol |
| 10 | sensor |
| 12 | query |
| 14 | touch down |
| 16 | brake engagement |
| 17 | transferring sensor data |
| 18 | collecting sensor data |
| 19 | analyzing sensor data |
| 20 | storing received sensor data |
| 22 | removing outliers |
| 24 | calculating of statistical features / sensor features |
| 26 | calculating at least one condition indicator |
| 28 | comparing / detecting |
| 30 | isolate root cause |
| 32 | executing regression algorithm |
| 34 | calculation of statistical features |
| 36 | generating maintenance advisory |
| 38 | sensor features |
| 40 | transformation matrix |
| 42 | pre-established limit |
| 44 | calculating conditional probabilities |
| 46 | conditional probability of presence of fault case |
| 48 | conditional probability of absence of fault case |
| 50 | aircraft |

**Claims**

1. Fault diagnostics system (2) for an aircraft brake system, comprising:

a plurality of sensors (10) coupled with the brake system and/or wheels of the aircraft (50) coupled with the brake system for detecting physical parameters that characterize at least a braking process,
an onboard data acquisition unit (4), and
a diagnostics unit (6),
wherein the onboard data acquisition unit (4) is coupled with the plurality of sensors (10) and is adapted to collect sensor data generated by the plurality of sensors (10) during a braking process,
wherein the onboard data acquisition unit (4) is couplable with the diagnostics unit (6) and is adapted to transfer the collected sensor data or data based on the collected sensor data to the diagnostics unit (6), and
wherein the diagnostics unit (6) comprises a processing unit adapted to analyze the received data through a machine-learning algorithm, which is trained using representative data characterizing normal and various anomalous states, to detect an anomalous state of the aircraft brake system, and, if an anomalous state is detected, to isolate a root cause of the anomalous state.

2. The system (2) of claim 1,

wherein the diagnostics unit (6) is a separate component arrangeable outside the aircraft (50), and
wherein the diagnostics unit (6) is connectable to the onboard data acquisition unit (4) through a wireless data transfer device.

3. The system (2) of claim 1 or 2, wherein the plurality of sensors (10) is selected from a group of sensors (10), the group comprising:

a wheel speed sensor,
a weight on wheel sensor,
a brake valve downstream pressure sensor,
an aircraft speed sensor,
a brake temperature sensor,
an aircraft position sensor,
an aircraft velocity sensor, and
an aircraft acceleration sensor.

4. The system (2) of any of the preceding claims, wherein the system (2) is adapted to calculate sensor features from the collected sensor data for transferring to or analyzing in the diagnostics unit (6), wherein the sensor features are calculated through at least one calculation method from a group of calculation methods, the group comprising:

- mean,

- root mean square,
- standard deviation,
- skewness,
- kurtosis,
- spectral features, and
- crest factor.

5. The system (2) of any of the preceding claims, wherein the diagnostics unit (6) is adapted to detect the presence of any anomalous state by:

   - calculating at least one condition indicator from the received data through executing a linear discriminant analysis (LDA) classification algorithm, and
   - comparing the at least one condition indicator with previously established limits for anomalous states.

6. The system (2) of claim 5, wherein the diagnostics unit (6) is further adapted to supply the condition indicators to a Bayesian algorithm to determine conditional probabilities of several pre-defined and trained fault cases and comparing the determined conditional probabilities with previously established condition probability tables to isolate the root cause of the anomalous state.

7. The system (2) of claim 6,

   wherein the diagnostics unit (6) is further adapted to check, whether the isolated root cause is progressive in nature, and to execute a machine-learning based regression algorithm for a magnitude assessment of the root cause if the isolated root cause is progressive in nature.

8. Fault diagnostics method for an aircraft brake system, comprising:

   collecting (18), through an onboard data acquisition unit (6), sensor data from a plurality of sensors (10) coupled with the brake system and/or wheels of the aircraft coupled with the brake system for detecting physical parameters that characterize at least a braking process, transferring (17) the collected sensor data or data based on the collected sensor data to a diagnostics unit (6), and analyzing (19) the received data through a machine-learning algorithm in a processing unit, which is trained using representative data characterizing normal and various anomalous states, to detect (28) an anomalous state of the aircraft brake system, and, if an anomalous state is detected, to isolate (30) a root cause of the anomalous state.

9. The method of claim 8,

   wherein the diagnostics unit (6) is a separate component arrangeable outside the aircraft (50), and
   wherein the method further comprises connecting the onboard data acquisition unit (4) to the diagnostics unit (6) through a wireless data transfer device.

10. The method of claim 8 or 9, wherein the plurality of sensors (10) is selected from a group of sensors (10), the group comprising:

    a wheel speed sensor,
    a weight on wheel sensor,
    a brake valve downstream pressure sensor,
    an aircraft speed sensor,
    a brake temperature sensor,
    an aircraft position sensor,
    an aircraft velocity sensor, and
    an aircraft acceleration sensor.

11. The method of any of the claims 8 to 10, further comprising calculating sensor features (24) from the collected sensor data for transferring to or analyzing in the diagnostics unit (6), wherein the sensor features are calculated through at least one calculation method from a group of calculation methods, the group comprising:

    - mean,
    - root mean square,
    - standard deviation,
    - skewness,
    - kurtosis,
    - spectral features, and
    - crest factor.

12. The method of any of the claims 8 to 11, further comprising detecting (28) the presence of any anomalous state by:

    - calculating at least one condition indicator (26) from the received data through executing a linear discriminant analysis (LDA) classification algorithm, and
    - comparing (28) the at least one condition indicator with previously established limits (42) for anomalous states.

13. The method of claim 12, further comprising supplying the condition indicators to a Bayesian algorithm to determine (44) conditional probabilities (46, 48) of several pre-defined and trained fault cases and comparing the determined conditional probabilities (46, 48) with previously established condition probability tables to isolate the root cause of the anomalous state.

14. The method of claim 13, further comprising

checking, whether the isolated root cause is progressive in nature, and
executing (32) a machine-learning based regression algorithm for a magnitude assessment of the root cause if the isolated root cause is progressive in nature.

15. Aircraft (50), having a system (2) of any of the claims 1 to 7.

**Patentansprüche**

1. Fehlerdiagnosesystem (2) für ein Flugzeugbremssystem, Folgendes umfassend:

eine Vielzahl von Sensoren (10), die mit dem Bremssystem und/oder mit dem Bremssystem gekoppelten Rädern des Flugzeugs (50) gekoppelt sind, um physikalische Parameter zu erfassen, die mindestens einen Bremsvorgang charakterisieren,
eine bordeigene Datenerfassungseinheit (4), und
eine Diagnoseeinheit (6),
wobei die bordeigene Datenerfassungseinheit (4) mit der Vielzahl von Sensoren (10) gekoppelt und dazu ausgelegt ist, durch die Vielzahl von Sensoren (10) während eines Bremsvorgangs erzeugte Sensordaten zu sammeln,
wobei die bordeigene Datenerfassungseinheit (4) mit der Diagnoseeinheit (6) koppelbar und dazu ausgelegt ist, die gesammelten Sensordaten oder auf den gesammelten Sensordaten basierende Daten an die Diagnoseeinheit (6) zu übertragen, und
wobei die Diagnoseeinheit (6) eine Verarbeitungseinheit umfasst, die dazu ausgelegt ist, die empfangenen Daten mittels eines Maschinenlernalgorithmus zu analysieren, der unter Verwendung repräsentativer Daten, die normale und verschiedene anomale Zustände charakterisieren, trainiert ist, um einen anomalen Zustand des Flugzeugbremssystems zu erkennen und, falls ein anomaler Zustand erkannt wird, eine Grundursache des anomalen Zustands zu isolieren.

2. System (2) nach Anspruch 1,

wobei die Diagnoseeinheit (6) eine separate Komponente ist, die außerhalb des Flugzeugs (50) anordenbar ist, und
wobei die Diagnoseeinheit (6) mit der bordeigenen Datenerfassungseinheit (4) über eine drahtlose Datenübertragungsvorrichtung verbindbar ist.

3. System (2) nach Anspruch 1 oder 2,
wobei die Vielzahl von Sensoren (10) aus einer Gruppe von Sensoren (10) ausgewählt ist, wobei die Gruppe Folgendes umfasst:

einen Raddrehzahlsensor,
ein Gewicht am Radsensor,
einen Drucksensor stromabwärts des Bremsventils,
einen Flugzeuggeschwindigkeitssensor,
einen Bremstemperatursensor,
einen Flugzeugpositionssensor,
einen Flugzeuggeschwindigkeitsvektorsensor, und
einen Flugzeugbeschleunigungssensor.

4. System (2) nach einem der vorhergehenden Ansprüche, wobei das System (2) dazu ausgelegt ist, Sensormerkmale aus den gesammelten Sensordaten zum Übertragen zu oder Analysieren in der Diagnoseeinheit (6) zu berechnen, wobei die Sensormerkmale durch mindestens ein Berechnungsverfahren aus einer Gruppe von Berechnungsverfahren berechnet werden, wobei die Gruppe Folgendes umfasst:

- Mittelwert,
- quadratisches Mittel,
- Standardabweichung,
- Schiefe,
- Kurtosis,
- spektrale Merkmale, und
- Scheitelfaktor.

5. System (2) nach einem der vorhergehenden Ansprüche, wobei die Diagnoseeinheit (6) dazu ausgelegt ist, das Vorhandensein eines beliebigen anomalen Zustands durch Folgendes zu erkennen:

- Berechnen mindestens eines Zustandsindikators aus den empfangenen Daten durch Ausführen eines Klassifizierungsalgorithmus für eine lineare Diskriminanzanalyse (LDA), und
- Vergleichen des mindestens einen Zustandsindikators mit zuvor festgelegten Grenzwerten für anomale Zustände.

6. System (2) nach Anspruch 5,
wobei die Diagnoseeinheit (6) ferner dazu ausgelegt ist, die Zustandsindikatoren an einen Bayes'schen Algorithmus zu liefern, um bedingte Wahrscheinlichkeiten mehrerer vordefinierter und trainierter Fehlerfälle zu bestimmen und die bestimmten bedingten Wahrscheinlichkeiten mit zuvor festgelegten Zustandswahrscheinlichkeitstabellen zu vergleichen, um die Grundursache des anomalen Zustands zu isolieren.

7. System (2) nach Anspruch 6,

   wobei die Diagnoseeinheit (6) ferner dazu ausgelegt ist, zu prüfen, ob die isolierte Grundursache progressiver Natur ist, und einen auf maschinellem Lernen basierenden Regressionsalgorithmus für eine Größenbewertung der Ursache auszuführen, wenn die isolierte Grundursache progressiver Natur ist.

8. Fehlerdiagnoseverfahren für ein Flugzeugbremssystem, Folgendes umfassend:

   Sammeln (18) von Sensordaten durch eine bordeigene Datenerfassungseinheit (6) von einer Vielzahl von Sensoren (10), die mit dem Bremssystem und/oder den mit dem Bremssystem gekoppelten Rädern des Flugzeugs gekoppelt sind, um physikalische Parameter zu erfassen, die mindestens einen Bremsvorgang charakterisieren, Übertragen (17) der gesammelten Sensordaten oder auf den gesammelten Daten basierender Daten an eine Diagnoseeinheit (6), und Analysieren (19) der empfangenen Daten mittels eines Maschinenlernalgorithmus in einer Verarbeitungseinheit, der unter Verwendung repräsentativer Daten trainiert ist, die normale und verschiedene anomale Zustände charakterisieren, um einen anomalen Zustand des Flugzeugbremssystems zu erfassen (28) und, falls ein anomaler Zustand erfasst wird, (30) eine Grundursache des anomalen Zustands zu isolieren.

9. Verfahren nach Anspruch 8, wobei die Diagnoseeinheit (6) eine separate Komponente ist, die außerhalb des Flugzeugs (50) anordenbar ist, und wobei das Verfahren ferner das Verbinden der bordeigenen Datenerfassungseinheit (4) mit der Diagnoseeinheit (6) über eine drahtlose Datenübertragungsvorrichtung umfasst.

10. Verfahren nach Anspruch 8 oder 9, wobei die Vielzahl von Sensoren (10) aus einer Gruppe von Sensoren (10) ausgewählt ist, wobei die Gruppe Folgendes umfasst:

    einen Raddrehzahlsensor, ein Gewicht am Radsensor, einen Drucksensor stromabwärts des Bremsventils, einen Flugzeuggeschwindigkeitssensor, einen Bremstemperatursensor, einen Flugzeugpositionssensor,

einen Flugzeuggeschwindigkeitsvektorsensor, und einen Flugzeugbeschleunigungssensor.

11. Verfahren nach einem der Ansprüche 8 bis 10, ferner umfassend das Berechnen von Sensormerkmalen (24) aus den gesammelten Sensordaten zum Übertragen zu oder Analysieren in der Diagnoseeinheit (6), wobei die Sensormerkmale durch mindestens ein Berechnungsverfahren aus einer Gruppe von Berechnungsverfahren berechnet werden, wobei die Gruppe Folgendes umfasst:

    - Mittelwert,
    - quadratisches Mittel,
    - Standardabweichung,
    - Schiefe,
    - Kurtosis,
    - spektrale Merkmale, und
    - Scheitelfaktor.

12. Verfahren nach einem der Ansprüche 8 bis 11, ferner umfassend Erfassen (28) des Vorhandenseins eines beliebigen anomalen Zustands durch:

    - Berechnen mindestens eines Zustandsindikators (26) aus den empfangenen Daten durch Ausführen eines Klassifizierungsalgorithmus für eine lineare Diskriminanzanalyse (LDA), und
    - Vergleichen (28) des mindestens einen Zustandsindikators mit zuvor festgelegten Grenzwerten (42) für anomale Zustände.

13. Verfahren nach Anspruch 12, ferner umfassend das Liefern der Zustandsindikatoren an einen Bayes'schen Algorithmus, um bedingte Wahrscheinlichkeiten (46, 48) mehrerer vordefinierter und trainierter Fehlerfälle zu bestimmen (44) und die bestimmten bedingten Wahrscheinlichkeiten (46, 48) mit zuvor festgelegten Zustandswahrscheinlichkeitstabellen zu vergleichen, um die Grundursache des anomalen Zustands zu isolieren.

14. Verfahren nach Anspruch 13, ferner Folgendes umfassend:

    Prüfen, ob die isolierte Grundursache progressiver Natur ist, und Ausführen (32) eines auf maschinellem Lernen basierenden Regressionsalgorithmus für eine Größenbewertung der Grundursache, wenn die isolierte Grundursache progressiver Natur ist.

15. Flugzeug (50) mit einem System (2) nach einem der Ansprüche 1 bis 7.

**Revendications**

1. Système (2) de diagnostic de défaut pour un système de freinage d'aéronef, comprenant :

   une pluralité de capteurs (10) couplés au système de freinage et/ou aux roues de l'aéronef (50) couplées au système de freinage, destinés à détecter des paramètres physiques qui caractérisent au moins un processus de freinage, une unité d'acquisition de données embarquée (4), et une unité de diagnostic (6), dans lequel l'unité d'acquisition de données embarquée (4) est couplée à la pluralité de capteurs (10) et est adaptée à collecter des données de capteurs générées par la pluralité de capteurs (10) au cours d'un processus de freinage, dans lequel l'unité d'acquisition de données embarquée (4) est susceptible d'être couplée à l'unité de diagnostic (6) et est adaptée à transférer les données de capteurs collectées ou des données basées sur les données de capteurs collectées à l'unité de diagnostic (6), et dans lequel l'unité de diagnostic (6) comprend une unité de traitement adaptée à analyser les données reçues au moyen d'un algorithme d'apprentissage machine, qui est entraîné à l'aide de données représentatives caractérisant un état normal et divers états anormaux, afin de détecter un état anormal du système de freinage d'aéronef et, si un état anormal est détecté, d'isoler une cause profonde de l'état anormal.

2. Système (2) selon la revendication 1,

   dans lequel l'unité de diagnostic (6) est un composant distinct susceptible d'être agencé à l'extérieur de l'aéronef (50), et dans lequel l'unité de diagnostic (6) est susceptible d'être connectée à l'unité d'acquisition de données embarquée (4) au moyen d'un dispositif de transfert de données sans fil.

3. Système (2) selon la revendication 1 ou 2, dans lequel la pluralité de capteurs (10) sont choisis dans un groupe de capteurs (10), le groupe comprenant :

   un capteur de vitesse de roue, un capteur de poids sur roues, un capteur de pression aval de distributeur de freinage, un capteur de vitesse d'aéronef, un capteur de température d'aéronef, un capteur de position d'aéronef, un capteur de vitesse d'aéronef, et

   un capteur d'accélération d'aéronef.

4. Système (2) selon l'une quelconque des revendications précédentes, le système (2) étant adapté à calculer des caractéristiques de capteurs à partir des données de capteurs collectées en vue de leur transfert à l'unité de diagnostic (6) ou de leur analyse dans celle-ci, les caractéristiques de capteurs étant calculées au moyen d'au moins une méthode de calcul dans un groupe de méthodes de calcul, le groupe comprenant :

   - une moyenne,
   - une moyenne quadratique,
   - un écart-type,
   - un coefficient d'asymétrie,
   - un coefficient d'aplatissement,
   - des caractéristiques spectrales, et
   - un facteur de crête.

5. Système (2) selon l'une quelconque des revendications précédentes, dans lequel l'unité de diagnostic (6) est adaptée à détecter la présence de tout état anormal par :

   - calcul d'au moins un indicateur de condition à partir des données reçues par exécution d'un algorithme de classification par analyse discriminante linéaire (LDA), et
   - comparaison de l'au moins un indicateur de condition à des limites précédemment établies pour des états anormaux.

6. Système (2) selon la revendication 5, dans lequel l'unité de diagnostic (6) est adaptée en outre à fournir les indicateurs de condition à un algorithme bayésien afin de déterminer des probabilités conditionnelles de plusieurs cas de défaut prédéfinis et entraînés et à comparer les probabilités conditionnelles déterminées à des tables de probabilités conditionnelles précédemment établies pour isoler la cause profonde de l'état anormal.

7. Système (2) selon la revendication 6,

   dans lequel l'unité de diagnostic (6) est adaptée en outre à vérifier si la cause profonde isolée est ou non de nature progressive, et exécuter un algorithme de régression basé sur l'apprentissage machine pour une évaluation de l'ampleur de la cause profonde si la cause profonde isolée est de nature progressive.

8. Procédé de diagnostic de défaut pour un système de freinage d'aéronef, comprenant :

   la collecte (18), au moyen d'une unité d'acquisition de données embarquée (6), de données de capteurs auprès d'une pluralité de capteurs (10) couplés au système de freinage et/ou aux roues de l'aéronef couplées au système de freinage, destinés à détecter des paramètres physiques qui caractérisent au moins un processus de freinage,

le transfert (17) des données de capteurs collectées ou de données basées sur les données de capteurs collectées à une unité de diagnostic (6), et

l'analyse (19) des données reçues au moyen d'un algorithme d'apprentissage machine dans une unité de traitement, qui est entraîné à l'aide de données représentatives caractérisant un état normal et divers états anormaux, afin de détecter (28) un état anormal du système de freinage d'aéronef et, si un état anormal est détecté, d'isoler (30) une cause profonde de l'état anormal.

9. Procédé selon la revendication 8,

dans lequel l'unité de diagnostic (6) est un composant distinct susceptible d'être agencé à l'extérieur de l'aéronef (50), et

le procédé comprenant en outre la connexion de l'unité d'acquisition de données embarquée (4) à l'unité de diagnostic (6) au moyen d'un dispositif de transfert de données sans fil.

10. Procédé selon la revendication 8 ou 9, dans lequel la pluralité de capteurs (10) sont choisis dans un groupe de capteurs (10), le groupe comprenant :

un capteur de vitesse de roue, un capteur de poids sur roues, un capteur de pression aval de distributeur de freinage, un capteur de vitesse d'aéronef, un capteur de température d'aéronef, un capteur de position d'aéronef, un capteur de vitesse d'aéronef, et un capteur d'accélération d'aéronef.

11. Procédé selon l'une quelconque des revendications 8 à 10,

comprenant en outre le calcul de caractéristiques de capteurs (24) à partir des données de capteurs collectées en vue de leur transfert à l'unité de diagnostic (6) ou de leur analyse dans celle-ci, les caractéristiques de capteurs étant calculées au moyen d'au moins une méthode de calcul dans un groupe de méthodes de calcul, le groupe comprenant :

- une moyenne,
- une moyenne quadratique,

- un écart-type,
- un coefficient d'asymétrie,
- un coefficient d'aplatissement,
- des caractéristiques spectrales, et
- un facteur de crête.

12. Procédé selon l'une quelconque des revendications 8 à 11,

comprenant en outre la détection (28) de la présence de tout état anormal par :

- calcul d'au moins un indicateur de condition (26) à partir des données reçues par exécution d'un algorithme de classification par analyse discriminante linéaire (LDA), et
- comparaison (28) de l'au moins un indicateur de condition à des limites précédemment établies (42) pour des états anormaux.

13. Procédé selon la revendication 12,

comprenant en outre la fourniture des indicateurs de condition à un algorithme bayésien afin de déterminer (44) des probabilités conditionnelles (46, 48) de plusieurs cas de défaut prédéfinis et entraînés et la comparaison des probabilités conditionnelles déterminées (46, 48) à des tables de probabilités conditionnelles précédemment établies pour isoler la cause profonde de l'état anormal.

14. Procédé selon la revendication 13, comprenant en outre

la vérification si la cause profonde isolée est ou non de nature progressive, et

l'exécution (32) d'un algorithme de régression basé sur l'apprentissage machine pour une évaluation de l'ampleur de la cause profonde si la cause profonde isolée est de nature progressive.

15. Aéronef (50), doté d'un système (2) selon l'une quelconque des revendications 1 à 7.

Fig. 1

**Onboard data acquisition system** (4)

Start

Check weight on wheel sensor (12)

Has aircraft touched down? (14) — no → (back to Check weight on wheel sensor)

yes ↓

Pilot command for brake/auto brake engagement (16) — no → Stop

yes ↓

Record the sensor data of the brake system (18)

(10, 10, 10, 10)

(17)

**Offboard diagnostic system** (2, 6, 8, 19)

**Data manipulation**

Store sensor data from brake system (20)

Outer removal (22)

Calculate statistical features (24)

Calculate condition indicators through LDA (26)

**State detection**

Run LDA classification algorithm for fault detection (28)

Is fault detected? — no → Stop

yes ↓

Run LDA algorithm for fault detection (30)

Is the fault progressive in nature? — yes → 

no →

**Fault magnitude assessment**

Calculate statistical features (34)

Run regression algorithm for fault identification (32)

Maintenance Adisory generation (36)

Advisory generation

Stop

EP 4 393 782 B1

12

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2468596 B1
- EP 3354523 B1
- US 2019371093 A1